# EUROPÄISCHE PATENTSCHRIFT

(11) **EP 2 149 956 B1**
(45) Veröffentlichungstag und Bekanntmachung des Hinweises auf die Patenterteilung: **13.12.2017**
(21) Anmeldenummer: 08013764.9
(22) Anmeldetag: 31.07.2008
(51) Int. Cl.: H02J 1/10, H02J 1/14

(54) **Modulares elektrisches System und Verfahren zum Betrieb**
Modular electrical system and method for its operation
Système électrique modulaire et son procédé de fonctionnement

(43) Veröffentlichungstag der Anmeldung: 03.02.2010
(73) Patentinhaber: Siemens Aktiengesellschaft, 80333 München (DE)
(72) Erfinder: Abert, Michael, 76474 Au (DE); Engl, Werner, 92706 Luhe-Wildenau (DE); Griessbach, Gunter, 09423 Gelenau (DE); Hirmer, Gerald, 92708 Mantel (DE); Klamm, Arnold, 76870 Kandel (DE); Metzler, Matthias, 76229 Karlsruhe (DE); Schmidt, Dirk, 08321 Zschorlau/OT Albernau (DE)

(56) Entgegenhaltungen:
- DE-A1- 10 252 292
- DE-A1-102004 035 126
- US-A1- 2003 151 309

## Beschreibung

Die Erfindung betrifft ein modulares elektrisches System mit einem ersten Strom abgebenden Quellen-Modul und ein daran anschließbares erstes Strom aufnehmenden Senken-Modul, wobei das erste Senken-Modul zur Kennzeichnung seines maximalen Leistungsbedarfs ein erstes Senken-Kennzeichnungsmittel aufweist.

Des Weiteren betrifft die Erfindung ein Verfahren zum Betrieb eines solchen modularen elektrischen Systems.

Bei modularen elektrischen Systemen, wie beispielsweise bei einem modular aufgebauten Automatisierungssystem, ist es üblich, auf einer Back-Plane-Struktur oder einer einfachen Montageschiene verschiedene Baugruppen der Automatisierungstechnik anzuordnen und elektrisch miteinander zu verbinden. Diese verschiedenen Baugruppen können dann grundsätzlich in Baugruppen, welche die Funktion eines Quellen-Moduls übernehmen, und Baugruppen, welche die Funktion eines Senken-Moduls übernehmen, unterschieden werden. So befinden sich in der Regel in einem modular aufgebauten Automatisierungssystem eine CPU, mindestens eine Stromversorgungsbaugruppe, mehrere Peripheriebaugruppen, sowie bei Bedarf weitere Baugruppen zu Kommunikationszwecken. Die Strom abgebenden Stromversorgungsbaugruppen werden als Quellen-Module eingestuft und die Strom aufnehmenden Baugruppen, wie beispielsweise eine Peripheriebaugruppe, wird als Senken-Modul eingestuft.

Beim Betrieb des Automatisierungssystems kann es sowohl beim Hochlauf der Baugruppen, als auch während des Betriebes zu unvorhersehbaren Spontanausfällen der Stromversorgungsbaugruppen kommen, wobei die Spontanausfälle durch einen nicht angepassten Leistungsbedarf der Strom aufnehmenden Baugruppen an die Strom abgebenden Baugruppen entstehen.

Ein Anwender des oben genannten Automatisierungssystems entscheidet bei der Auslegung des Systems, welche Leistungskapazität der Stromversorgungsbaugruppe oder -baugruppen für sein System ausreichend ist. Ist dabei die verfügbare Leistung, beispielsweise nur geringfügig, kleiner als die maximal benötigte Leistung gewählt, so kann es dazu kommen, dass ein Automatisierungssystem zunächst völlig problemlos arbeitet, es jedoch während des Betriebes, abhängig von scheinbar zufälligen Umweltparametern, ausfällt. Dieser Ausfall kann möglicherweise erst nach einer längeren Zeit eines ordnungsgemäßen Betriebes auftreten.

Beispielhaft sind folgende Szenarien denkbar:
1. Ein System "fährt" scheinbar ordnungsgemäß hoch, bricht jedoch spontan zusammen, wenn alle Peripheriebaugruppen aktiv werden.
2. Ein System "fährt" scheinbar ordnungsgemäß hoch, bricht jedoch nach Erreichen der Betriebstemperatur spontan zusammen.
3. Ein System "fährt" ordnungsgemäß hoch, läuft beispielsweise Jahre lang korrekt, bricht jedoch beim Zustecken einer weiteren Peripheriebaugruppe spontan zusammen.

In den oben genannten Fällen besteht eine Überlast, die oft zunächst für das Automatisierungssystem unerkannt bleibt.

Nach DE 10 2005 039 886 A1 ist ein Leistungsbedarf kontrolliertes modulares System bekannt. Bei diesem System sind in an eine Stromversorgung angeschlossenen Einzelmodulen jeweils Kennzeichnungen angeordnet, welche den Leistungsbedarf der Einzelmodule wiedergeben. Über ein Hauptmodul kann mittels der Kennzeichnungen in den Einzelmodulen ein Gesamtleistungsbedarf aller angeschlossenen Einzelmodule hinsichtlich einer Überlast ermittelt werden. Nachteilig an diesem System ist es, dass nur ein zustecken weiterer Einzelmodule hinsichtlich des Gesamtleistungsbedarfs berücksichtigt wird. Wird dem System beispielsweise eine zusätzliche Stromversorgungsbaugruppe zugefügt, so kann diese zur Ermittlung eines Leistungsverhältnisses zwischen den Strom aufnehmenden und den Strom abgebenden Baugruppen nicht berücksichtigt werden. US2003151309 offenbart ein modulares elektrisches System mit einem ersten Quellen-Modul, und einem Senken-Modul, wobei die Quellen-und Senken-Module Mittel aufweisen, zur Kenzeichnung der Leistungskapazität und des Leistungsbedarfs.

Es ist daher die Aufgabe der Erfindung ein modulares elektrisches System nach dem Stand der Technik derart zu erweitern, dass sich eine Leistungsbilanzierung bzw. die Ermittlung eines Leistungsverhältnisses auch auf die Strom abgebenden Baugruppen bezieht.

Die Aufgabe wird für das eingangs genannte modulare elektrische System dadurch gelöst, dass das erste Quellen-Modul ein erstes Quellen-Kennzeichnungsmittel zur Kennzeichnung seiner Leistungskapazität aufweist, wobei das erste Senken-Kennzeichnungsmittel und das erste Quellen-Kennzeichnungsmittel zum Ermitteln eines Leistungsverhältnisses zwischen dem ersten Quellen-Modul und dem ersten Senken-Modul des Systems an eine Zweidrahtleitung zum Erzeugen einer Differenzspannung angeschlossen sind. Die Zweidrahtleitung, auf welcher die Differenzspannung als Ergebnis der Leistungsbilanzierung zur Verfügung steht, kann sich dabei als eine Art Zweidrahtbus durch das modulare System ziehen. Im Gegensatz zu einer Eindrahtleitung, bei welcher sich durch den Anschluss von Kennzeichnungsmitteln gegen Masse eine "single ended" Konfiguration einstellt, sind bei der Zweidrahtleitung vorteilhafterweise weniger EMV-Probleme zu erwarten. Bei beispielsweise auf eine Backplane-Struktur steckbaren Modulen, führt die Zweidrahtleitung an jedem zugehörigen Steckplatz für das jeweilige Modul vorbei und kann durch Stecken des Moduls mit dem jeweiligen Kennzeichnungsmittel verbunden werden. Dabei sind Steckkontakte vorzugsweise so ausgelegt, dass die Kontakte, welche zu den Kennzeichnungsmitteln führen, voreilend ausgelegt sind. D.h. vor dem gänzlichen Zuschalten eines Moduls kann bereits über die Kennzeichnungsmittel die Leistungsbilanz ermittelt werden.

In einer bevorzugten Ausgestaltung ist die Zweidrahtleitung mit einem Hauptmodul verbunden und die Differenzspannung im Hauptmodul zum Erkennen einer Überlast des Systems auswertbar. In dem Hauptmodul sind dann vorzugsweise Mittel zur Auswertung der Differenzspannung angeordnet. Diese Mittel können beispielsweise durch eine dem Fachmann geläufige Verschaltung von Operationsverstärkern realisiert werden. Ein Ausgang einer solchen Operationsverstärkerschaltung kann sodann ein analoges Signal bereitstellen, welches die Leistungsbilanzierung als ein Wert von beispielsweise 0-2 darstellt. Dabei könnte ein Wert welcher kleiner als 1 ist, bedeuten, dass genügend Leistung der Quellen-Module für die Senken-Module zur Verfügung steht. Ein Wert welcher gleich 1 ist, würde sodann bedeuten, dass genau soviel Leistung zur Verfügung steht, wie die Senken-Module an Leistungsbedarf benötigen.

Eine bevorzugte technische Lösung um die Differenzspannung auf der Zweidrahtleitung zu erzeugen besteht darin, dass das erste Quellen-Kennzeichnungsmittel derart ausgestaltet ist, dass mittels des ersten Quellen-Kennzeichnungsmittel Strom in die Zweidrahtleitung einspeisbar ist, und dass das erste Senken-Kennzeichnungsmittel derart ausgestaltet ist, dass mittels des ersten Senken-Kennzeichnungsmittels Strom aus der Zweidrahtleitung entnehmbar ist. Das erste Quellen-Kennzeichnungsmittel könnte dabei vorzugsweise als aktive elektrisches Element und das erste Senken-Kennzeichnungsmittel als passives elektrisches Element ausgestaltet sein. So sind die Quellenmodule vorzugsweise mit einer Stromquelle als Quellenkennzeichnungsmittel ausgestaltet und die Senkenmodule mit einem Strom aufnehmenden Festwiderstand als Senken-Kennzeichnungsmittel ausgestaltet. Die unterschiedlichen Belastungen durch die Festwiderstände auf der Zweidrahtleitung bzw. die unterschiedlichen Stromeinspeisungen in die Zweidrahtleitung führen dann zu einer Differenzspannung auf der Zweidrahtleitung, welche das Gesamtergebnis widerspiegelt.

Vorzugsweise weist dabei das erste Quellen-Kennzeichnungsmittel zwei gleichwirkende elektrische Bauelemente auf. Die Quellen-Kennzeichnungsmittel als aktives elektrisches Element, welche vorzugsweise als Strom- oder Spannungsquelle ausgestaltet sind, sind aus Symmetriegründen zur Erzeugung der Differenzspannung auf der Zweidrahtleitung als zwei gleichwirkende Bauelemente auszugestalten. Dabei ist es sinnvoll wenn bei Spannungsquellen jeweils ein Widerstand zur Lastaufteilung in Reihe geschaltet wird.

Auch bei den Senken-Kennzeichnungsmitteln ist es vorteilhaft, dass diese zwei gleichwirkende elektrische passive Elemente aufweisen. Das bedeutet beispielsweise, dass für ein Senken-Kennzeichnungsmittel aus Festwiderständen je ein Festwiderstand an jeweils einer Leitung der Zweidrahtleitung anliegt und die beiden Festwiderstände den gleichen Widerstandswert aufweisen.

In einer besonders optimierten Ausgestaltung weist das erste Kennzeichnungsmittel einen ersten Anschluss, einen zweiten Anschluss, einen dritten Anschluss und einen vierten Anschluss auf, dabei ist der erste Anschluss an eine Plusleitung und der vierte Anschluss an eine Minusleitung einer Versorgungsspannungsleitung und der zweite Anschluss an einen ersten Leiter und der dritte Anschluss an einen zweiten Leiter der Zweidrahtleitung angeschlossen. Durch eine derartige Beschaltung eines Quellen-Kennzeichnungsmittel bzw. auch eines Senken-Kennzeichnungsmittels können diese Mittel als einfache in die Module elektrisch zusteckbare Kennzeichnungsmittel eingebaut werden. Ändert sich beispielsweise der Leistungsbedarf einer Peripheriebaugruppe innerhalb eines modularen Systems, so kann der Betreiber eines solchen Systems ein an die neuen Verhältnisse angepasstes Kennzeichnungsmittel in die jeweilige Baugruppe stecken, so dass letztendlich für den Gesamtbetrieb des Systems die Berechnung einer aussagekräftigen Leistungsbilanzierung gewährleistet ist.

Die Vorteile der erfindungsgemäßen Vorrichtung werden besonders deutlich, wenn eine Mehrzahl von Strom abgebenden Quellen-Modulen und eine weitere Mehrzahl daran anschließbarer Strom aufnehmende Senken-Module mit entsprechenden Quellen-Kennzeichnungsmitteln bzw. Senken-Kennzeichnungsmitteln vorhanden ist. Beispielsweise liegen dabei sämtliche Quellen-Module und sämtliche Senken-Module in einer Parallelschaltung an einem Energieversorgungsbus, welcher sich ebenfalls auf der bereits erwähnten Backplane-Struktur befinden könnte. Es wäre auch denkbar, dass bei beispielsweise einer Konfiguration mit nur einem Quellen-Modul und drei Senken-Module bei drohender Unterversorgung der Senken-Modulen ein weiteres Quellen-Modul in Abhängigkeit von der Leistungsbilanzierung bei Bedarf zu dem Energieversorgungsbus zugeschaltet wird.

Bei dem eingangs genannten Verfahren zum Betrieb eines modularen elektrischen Systems wird die Aufgabe dadurch gelöst, dass für das erste Quellen-Modul ein ersten Quellen-Kennzeichnungsmittel zur Kennzeichnung seiner Leistungskapazität vorgesehen wird, wobei das erste Senken-Kennzeichnungsmittel und das erste Quellen-Kennzeichnungsmittel zum Ermitteln eines Leistungsverhältnisses zwischen dem ersten Quellen-Modul und dem ersten Senken-Modul des Systems an eine Zweidrahtleitung zum Erzeugen einer Differenzspannung auf der Zweidrahtleitung geschaltet werden. Damit steht eine Differenzspannung, welche über das Verhältnis von einer zur Verfügung stehenden Leistung und einer aufzunehmenden Leistung wiedergibt, innerhalb des Systems zur Verfügung.

Wird in einem nächsten Verfahrensschritt die Zweidrahtleitung mit einem Hauptmodul verbunden, und die Differenzspannung im Hauptmodul zum Erkennen einer Überlast des Systems ausgewertet, so kann beispielsweise mittels einer Erzeugung von Diagnose- oder Systemalarmen flexibel auf eine mögliche Überlastung des Systems reagiert werden und es können Maßnahmen zur Vermeidung eines Systemausfalls ergriffen werden.

In einer vorteilhaften Weiterbildung des Verfahrens ist das erste Quellen-Kennzeichnungsmittel derart ausgestaltet, dass Strom in die Zweidrahtleitung eingespeist wird und dass das erste Senken-Kennzeichnungsmittel derart ausgestaltet ist, dass Strom aus der Zweidrahtleitung entnommen wird.

Durch die vorgenannte Erzeugung der Differenzspannung kann auf vorteilhafte Weise vor einem Systemstart entschieden werden, ob die zur Verfügung stehende Leistung größer oder gleicher der maximal aufnehmbaren Leistung ist und bei Unterschreitung eines bestimmbaren ersten Verhältnisses wird das System aktiviert. Würde das erste bestimmbare Verhältnis, welches aufgrund der Differenzspannung ermittelt wird, einen bestimmten Wert überschreiten, so wird vorzugsweise ein Signal erzeugt, welches ein "Hochfahren" des Systems verhindert.

Verfahrensgemäß ist es vorteilhaft, wenn nach Aktivierung des Systems ein zweites Verhältnis zur Überwachung einer Überlast genutzt wird, wobei das zweite Verhältnis größer gewählt wird als das erste Verhältnis um eine Fehlentscheidung durch Störungen auf der Zweidrahtleitung zu minimieren. Nimmt das zweite Verhältnis aufgrund der Differenzspannung beispielsweise einen Wert von 1,2 an, welches eine kurzzeitige Überlast von 20% repräsentiert, so kann das Hauptmodul dies mit einer entsprechenden Auswerteeinheit kurzzeitig tolerieren und erst bei längerfristigem Anhalten der Überlast mit einer entsprechenden Erzeugung von Fehlermeldungen oder Diagnosealarmen darauf reagieren. Bei kurzzeitigen Störungen, welche zur Verfälschung der Differenzspannung führen können, kann es sich beispielsweise um EMV-Störungen handeln. Diese EMV-Störungen werden beispielsweise durch Einkopplung von Störsignalen erzeugt, welche möglicherweise durch das Zuschalten von elektrischen Verbrauchern, welche sich in der Nähe der Zweidrahtleitungen befinden, entstehen. Damit wird dieses Verfahren und auch das zuvor beschriebene System mit seiner Zweidrahtleitung vorteilhaft in EMV belasteten Umgebungen mit räumlich verteilten Komponenten eingesetzt. Hingegen würde bei einer Leistungsbilanzierung nach dem Stand der Technik mit einer Ein-Draht-Leitung bei EMV-Störungen mit starken Abweichungen der entsprechenden Messwerte zu rechnen sein, was das verfahrensgemäße Vorgehen einer Leistungsbilanzierung nach dem Stand der Technik grundsätzlich in Frage stellen würde.

Ein Ausgestaltungsbeispiel und weitere Vorteile der Erfindung sind mit der Zeichnung wiedergegeben. Es zeigen:
- FIG 1: ein modulares System und
- FIG 2: eine Verschaltung von Kennzeichnungsmitteln an einer Zweidrahtleitung.

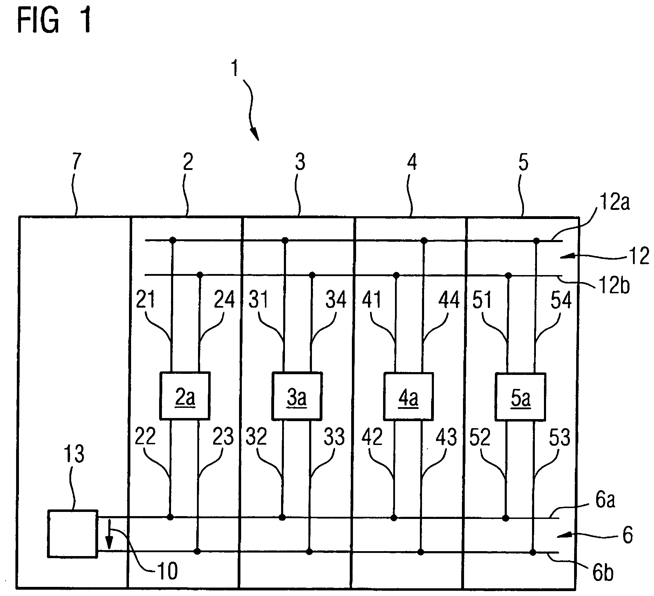

Gemäß FIG 1 ist ein modulares elektrisches System 1 dargestellt. Dabei weist das System 1 ein erstes Quellen-Modul 2, ein zweites Quellen-Modul 3, ein erstes Senken-Modul 4 und ein zweites Senken-Modul 5 als zusteckbare Baugruppen auf einer Backplane-Struktur auf, welche zusammen mit einem Hauptmodul 7 ein Automatisierungssystem bilden.

Eine Zweidrahtleitung 6 mit einem ersten Leiter 6a und einem zweiten Leiter 6b zieht sich, als ein Zweidrahtbus ausgestaltet, angefangen von dem Hauptmodul 7 über die Module 2, ...,5 durch das ganze Automatisierungssystem. Zum Anschluss an die Zweidrahtleitung weist das erste Quellenmodul 2 ein erstes Quellen-Kennzeichnungsmittel 2a auf und das zweite Quellen-Modul 3 weist ein zweites Quellen-Kennzeichnungsmittel 3a auf. Die Quellen-Kennzeichnungsmittel 2a,3a der Quellen-Module 2,3 repräsentieren die mittels der Quellen-Module 2,3 zur Verfügung stehende Leistung. Ein in dem ersten Senken-Modul 4 zur Verfügung stehendes erstes Senken-Kennzeichnungsmittel 4a und ein in dem zweiten Senkenmodul zur Verfügung stehendes zweites Senken-Kennzeichnungsmittel 5a repräsentieren jeweils die aufzunehmende Leistung der Senken-Module 4,5.

Die Quellen-/Senken-Kennzeichnungsmittel 2a,3a,4a und 5a weisen jeweils vier Anschlüsse zum Anschluss an die Zweidrahtleitung 6 und zum Anschluss an eine Versorgungsspannungsleitung 12 auf. Dabei wird die Versorgungsspannungsleitung 12 durch eine Plusleitung 12a und eine Minusleitung 12b gebildet. Das erste Quellen-Kennzeichnungsmittel 2a ist über einen ersten Anschluss 21 an die Plusleitung 12a zur Einspeisung eines Stromes über einen zweiten Anschluss 22 in den ersten Leiter 6a der Zweidrahtleitung 6 angeschlossen. Zur symmetrischen Einspeisung ist das erste Quellen-Kennzeichnungsmittel 2a weiterhin über einen vierten Anschluss 24 zur Einspeisung eines Stromes in den ersten Leiter 6b der Zweidrahtleitung 6 über einen dritten Anschluss 23 an die Minusleitung 12b angeschlossen.

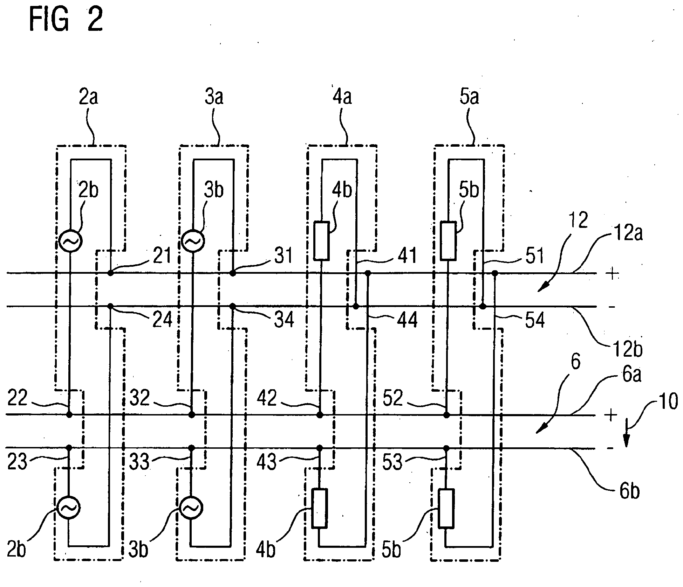

Die Anschlussweise für das zweite Quellen-Kennzeichnungsmittel 3a über seine vier Anschlüsse 31, ...,34 verhält sich wie die Anschlussweise des ersten Quellen-Kennzeichnungsmittels 2a. Der einzuspeisende Strom wird bei den Quellen-Kennzeichnungsmitteln 2a,3a über ihre jeweiligen Stromquellen 2b bzw. 3b hervorgerufen, wie es detaillierter in FIG 2 dargestellt ist. Die beiden Stromquellen 2b sind zwei gleichwirkende Stromquellen, welche jeweils einen gleichen Anteil Strom in den ersten Leiter 6a bzw. in den zweiten Leiter 6b einspeisen. Die beiden Stromquellen 2b sind daher mit dem gleichen Bezugszeichen versehen.

Bei den beiden Stromquellen 3b des zweiten Quellen-Kennzeichnungsmittel 3a verhält es sich genauso, allerdings unterscheidet sich hier die einzuspeisende Stromstärke der Stromquelle 3b von der der Stromquelle 2b, weil das zweite Quellen-Modul 3 eine größere Leistung bereitstellt als das erste Quellen-Modul 2.

Das erste Senken-Kennzeichnungsmittel 4a weist ebenfalls zwei gleichwirkende Bauelemente auf. In diesem Fall sind es zwei Festwiderstände 4b, welche jeweils den gleichen Widerstandswert aufweisen. Um eine symmetrische Belastung an der Zweidrahtleitung 6 zu erzielen, ist ein erster Festwiderstand 4b der zwei gleichwirkenden Festwiderstände 4b mit einem zweiten Anschluss 42 des ersten Senken-Kennzeichnungsmittel 4b an den ersten Leiter 6a der Zweidrahtleitung und mit einem vierten Anschluss 44 an die Minusleitung 12b der Versorgungsspannungsleitung 12 angeschlossen. Im Gegenzug dazu ist der weitere Festwiderstand 46 über einen dritten Anschluss 43 an den zweiten Leiter 6b der Zweidrahtleitung 6 und über einen vierten Anschluss 44 an die Plusleitung 12a angeschlossen. Durch diese Anschlussweise wird die Zweidrahtleitung 6 symmetrisch belastet und es kann somit auf der Zweidrahtleitung 6 eine der Belastung entsprechende Teildifferenzspannung erzeugt werden.

Die Anschlussweise der beiden Festwiderstände 5b des zweiten Senken-Kennzeichnungsmittels 5a ist wiederum ähnlich, allerdings unterscheidet sich hier der Widerstandswert des Festwiderstandes 5b von dem Widerstandswert des Festwiderstandes 4b.

Zusammenfassend kann gesagt werden, dass die Prüfung der Leistungsbilanz über eine differenzielle Signalleitung durchgeführt wird. Die differenzielle Signalleitung wird über Festwiderstände von den Senken proportional zu ihren Höchstleistungen belastet. Die Quellen dagegen speisen über Festwiderstände oder über Stromquellen Ströme jeweils proportional zu ihren Maximalleistungen in die differenzielle Signalleitung ein. Die Ströme der Stromquellen speisen dabei das Äquivalent, bezogen auf die Widerstandsmethode, ein. Das Ergebnis der Bilanzierung ist eine Differenzspannung 10 auf der Zweidrahtleitung 6, die bei steigender Leistungsreserve positiver und mit potentiell fehlender Leistung negativer wird.

Im Falle des Ausgleichs, wenn 100% der verfügbaren Leistung auch maximal nachgefragt werden, ist die Differenzspannung Null.

Die Auswertung der Differenzspannung 10 geschieht mit einem Mittel zur Auswertung der Differenzspannung 13, welches gemäß FIG 1 innerhalb des Hauptmoduls 7 angeordnet ist. Das Mittel 13 kann nach Auswertung der Differenzspannung 10 entsprechende Signale für das Hauptmodul 7 generieren, welche wiederum dazu genutzt werden, das System 1 vor einer Überlastung zu schützen oder entsprechend mit geeigneten Maßnahmen das System 1 "herunterfährt". Auch ist denkbar, dass aufgrund eines Prozesssignals eine weitere Baugruppe, welche auch als Quellen-Modul ausgestaltet ist, zu dem System 1 dynamisch hinzugeschaltet wird.

## Patentansprüche

1. Modulares elektrisches System (1) mit einem ersten Strom abgebenden Quellen-Modul (2) und ein daran anschließbares erstes Strom aufnehmendes Senken-Modul (4), wobei das erste Senken-Modul (4) zur Kennzeichnung seines maximalen Leistungsbedarfs ein erstes Senken-Kennzeichnungsmittel (4a) aufweist, wobei das erste Quellen-Modul (2) ein erstes Quellen-Kennzeichnungsmittel (2a) zur Kennzeichnung seiner Leistungskapazität aufweist, **dadurch gekennzeichnet, dass** das erste Senken-Kennzeichnungsmittel (4a) und das erste Quellen-Kennzeichnungsmittel (2a) zum Ermitteln eines Leistungsverhältnis zwischen dem ersten Quellen-Modul (2) und dem ersten Senken-Modul (4) des Systems (1) an eine Zweidrahtleitung (6) zum Erzeugen einer Differenzspannung (10) angeschlossen sind.

2. System (1) nach Anspruch 1, wobei die Zweidrahtleitung (6) mit einem Hauptmodul (7) verbunden ist und die Differenzspannung (10) im Hauptmodul (7) zum Erkennen einer Überlast des Systems (1) auswertbar ist.

3. System (1) nach Anspruch 1 oder 2, wobei das erste Quellen-Kennzeichnungsmittel (2a) derart ausgestaltet ist, dass Strom in die Zweidrahtleitung (6) einspeisbar ist, und das ersten Senken- Kennzeichnungsmittel (4a) derart ausgestaltet ist, dass Strom aus der Zweidrahtleitung (6) entnehmbar ist.

4. System (1) nach einem der Ansprüche 1 bis 3, wobei das erste Quellen-Kennzeichnungsmittel (2a) zwei gleichwirkende elektrisch aktive Bauelemente (2b) aufweist.

5. System (1) nach einem der Ansprüche 1 bis 4, wobei das erste Senken-Kennzeichnungsmittel (4a) zwei gleichwirkende elektrisch passive Bauelemente (4b) aufweist.

6. System (1) nach einem der Ansprüche 1 bis 5, wobei das Quellen-Kennzeichnungsmittel (2a) einen ersten Anschluss (21), einen zweiten Anschluss (22), einen dritten Anschluss (23) und einen vierten Anschluss (24) aufweist und
- der erste Anschluss (21) an eine Plusleitung (12a) und der vierte Anschluss (24) an eine Minusleitung (12b) einer Versorgungsspannungsleitung (12) und
- der zweite Anschluss (22) an einen ersten Leiter (6a) und der dritte Anschluss (23) an einen zweiten Leiter (6b) der Zweidrahtleitung (6)
angeschlossen ist.

7. System (1) nach einem der Ansprüche 1 bis 6, wobei eine Mehrzahl von Strom abgebenden Quellen-Modulen (2,3) und eine weitere Mehrzahl daran anschließbarer Strom aufnehmende Senken-Module (4,5) mit entsprechenden Quellen-Kennzeichnungsmittel (2a,3a) bzw. Senken-Kennzeichnungsmittel (4a,5a) vorhanden ist.

8. Verfahren zum Betrieb eines modularen elektrischen System
(1) mit zumindest einem ersten Strom abgebenden Quellen-Modul
(2) und zumindest ein daran anschließbares erstes Strom aufnehmendes Senken-Modul (4), wobei das erste Senken-Modul (4) zur Kennzeichnung seines maximalen Leistungsbedarfs ein erstes Senken-Kennzeichnungsmittel (4a) aufweist, wobei für das erste Quellen-Modul (2) ein erstes Quellen-Kennzeichnungsmittel (2a) zur Kennzeichnung seiner Leistungskapazität vorgesehen wird, **dadurch gekennzeichnet, dass** das erste Senken-Kennzeichnungsmittel (4a) und das erste Quellen-Kennzeichnungsmittel (2a) zum Ermitteln eines Leistungsverhältnis zwischen dem ersten Quellen-Modul (2) und dem ersten Senken-Modul (4) des Systems (1) an eine Zweidrahtleitung (6) zum Erzeugen einer Differenzspannung (10) auf der Zweidrahtleitung (6) geschaltet werden.

9. Verfahren nach Anspruch 8, wobei die Zweidrahtleitung (6) mit einem Hauptmodul (7) verbunden wird und die Differenzspannung (10) im Hauptmodul (7) zum Erkennen einer Überlast des Systems (1) ausgewertet wird.

10. Verfahren nach Anspruch 8 oder 9, wobei das erste Quellen-Kennzeichnungsmittel (2a) derart ausgestaltet ist, dass Strom in die Zweidrahtleitung (6) eingespeist wird, und das erste Senken-Kennzeichnungsmittel (4a) derart ausgestaltet ist, dass Strom aus der Zweidrahtleitung (6) entnommen wird.

11. Verfahren nach Anspruch 8 bis 10, wobei anhand der Differenzspannung (10) vor einem Systemstart entschieden wird, ob die zur Verfügung stehende Leistung größer oder gleich der maximal aufnehmbaren Leistung ist und bei Unterschreitung eines bestimmbaren ersten Verhältnis (V1) wird das System (1) aktiviert.

12. Verfahren nach Anspruch 11, wobei nach Aktivierung des Systems (1) ein zweites Verhältnis (V2) zur Überwachung einer Überlast genutzt wird, wobei das zweite Verhältnis (V2) grö-ßer gewählt wird als das erste Verhältnis (V1) um eine Fehlentscheidung durch Störungen auf der Zweidrahtleitung (6) zu minimieren.

## Claims

1. Modular electrical system (1) comprising a first current-emitting source module (2) and a first current-consuming sink module (4) which is connectable thereto, wherein the first sink module (4) has a first sink identification means (4a) for identifying its maximum power requirement,
wherein the first source module (2) has a first source identification means (2a) for identifying its power capacity, **characterised in that** the first sink identification means (4a) and the first source identification means (2a) for calculating a power ratio between the first source module (2) and the first sink module (4) of the system (1) are connected to a two-wire line (6) for the purpose of generating a differential voltage (10).

2. System (1) according to claim 1, wherein the two-wire line (6) is connected to a primary module (7) and the differential voltage (10) can be evaluated in the primary module (7) for the purpose of detecting an overload of the system (1).

3. System (1) according to claim 1 or 2, wherein the first source identification means (2a) is embodied in such a way that current can be fed into the two-wire line (6), and the first sink identification means (4a) is embodied in such a way that current can be taken from the two-wire line (6).

4. System (1) according to one of claims 1 to 3, wherein the first source identification means (2a) has two identically acting electrically active components (2b).

5. System (1) according to one of claims 1 to 4, wherein the first sink identification means (4a) has two identically acting electrically passive components (4b).

6. System (1) according to one of claims 1 to 5, wherein the source identification means (2a) has a first terminal (21), a second terminal (22), a third terminal (23) and a fourth terminal (24) and
- the first terminal (21) is connected to a plus line (12a) and the fourth terminal (24) is connected to a minus line (12b) of a supply voltage line (12) and
- the second terminal (22) is connected to a first conductor (6a) and the third terminal (23) is connected to a second conductor (6b) of the two-wire line (6).

7. System (1) according to one of claims 1 to 6, wherein a plurality of current-emitting source modules (2,3) and a further plurality of current-consuming sink modules (4,5) that are connectable thereto are present with corresponding source identification means (2a,3a) and sink identification means (4a,5a), respectively.

8. Method for operating a modular electrical system (1) comprising at least one first current-emitting source module (2) and at least one first current-consuming sink module (4) that is connectable thereto, wherein the first sink module (4) has a first sink identification means (4a) for identifying its maximum power requirement,
wherein a first source identification means (2a) is provided for the first source module (2) for the purpose of identifying its power capacity,
**characterised in that** the first sink identification means (4a) and the first source identification means (2a) for calculating a power ratio between the first source module (2) and the first sink module (4) of the system (1) are connected to a two-wire line (6) for the purpose of generating a differential voltage (10) on the two-wire line (6).

9. Method according to claim 8, wherein the two-wire line (6) is connected to a primary module (7) and the differential voltage (10) is evaluated in the primary module (7) for the purpose of detecting an overload of the system (1).

10. Method according to claim 8 or 9, wherein the first source identification means (2a) is embodied in such a way that current is fed into the two-wire line (6), and the first sink identification means (4a) is embodied in such a way that current is taken from the two-wire line (6).

11. Method according to claim 8 to 10, wherein prior to a system start it is decided on the basis of the differential voltage (10) whether the available power is greater than or equal to the maximum consumable power and the system (1) is activated if a determinable first ratio (V1) is undershot.

12. Method according to claim 11, wherein following activation of the system (1) a second ratio (V2) is used for monitoring an overload, wherein the second ratio (V2) is chosen greater than the first ratio (V1) in order to minimise an incorrect decision caused by interference on the two-wire line (6).

## Revendications

1. Système (1) électrique modulaire, comprenant un premier module (2) source cédant du courant et un premier module (4) puits absorbant du courant, qui peut s'y raccorder, le premier module (4) puits ayant, pour caractériser son besoin de puissance maximum, un premier moyen (4a) de caractérisation de puits,
le premier module (2) source ayant un premier moyen (2a) de caractérisation de source pour caractériser sa capacité de puissance,
**caractérisé en ce que** le premier moyen (4a) de caractérisation de puits et le premier moyen (2a) de caractérisation de source sont, pour la détermination d'un rapport de puissance entre le premier module (2) source et le premier module (4) puits du système (1) reliés à une ligne (6) bifilaire pour la production d'une tension (10) différentielle.

2. Système (1) suivant la revendication 1, dans lequel la ligne (6) bifilaire est reliée à un module (7) principal et la tension (10) différentielle peut être exploitée dans le module (7) principal pour détecter une surcharge du système (1).

3. Système (1) suivant la revendication 1 ou 2, dans lequel le premier moyen (2a) de caractérisation de source est conformé de manière à pouvoir injecter du courant dans la ligne (6) bifilaire et le premier moyen (4a) de caractérisation de puits est conformé de manière à pouvoir prélever du courant de la ligne (6) bifilaire.

4. Système (1) suivant l'une des revendications 1 à 3, dans lequel le premier moyen (2a) de caractérisation de source a deux composants (2b) actifs électriquement ayant le même effet.

5. Système (1) suivant l'une des revendications 1 à 4, dans lequel le premier moyen (4a) de caractérisation de puits a deux composants (4b) passifs électriquement ayant le même effet.

6. Système (1) suivant l'une des revendications 1 à 5, dans lequel le moyen (2a) de caractérisation a une première borne (21), une deuxième borne (22), une troisième borne (23) et une quatrième borne (24) et
- la première borne (21) est reliée à une ligne (12a) plus et la quatrième borne (24) a une ligne (12b) moins d'une ligne (12) de tension d'alimentation et
- la deuxième borne (22) est reliée à un premier conducteur (6a) et la troisième borne (23) à un deuxième conducteur (6b) de la ligne bifilaire.

7. Système (1) suivant l'une des revendications 1 à 6, dans lequel il y a une pluralité de modules (2, 3) source cédant du courant et une autre pluralité de modules (4, 5) puits absorbant du courant s'y raccordant, ayant des moyens (2a, 3a) de caractérisation de source ou des moyens (4a, 5a) de caractérisation de puits correspondants.

8. Procédé pour faire fonctionner un système (1) électrique modulaire ayant au moins un premier module (2) source cédant du courant et au moins un premier module (4) puits absorbant du courant s'y raccordant, le premier module (4) puits ayant, pour caractériser son besoin de puissance maximum, un premier moyen (4a) de caractérisation de puits,
dans lequel il est prévu pour le premier module (2) source un premier moyen (2a) de caractérisation de source pour caractériser sa capacité de puissance, **caractérisé en ce que** le premier moyen (4a) de caractérisation de puits et le premier moyen (2a) de caractérisation de source sont, pour la détermination d'un rapport de puissance entre le premier module (2) source et le premier module (4) puits du système (1), montés sur une ligne (6a) bifilaire pour la production d'une tension (10) différentielle sur la ligne (6) bifilaire.

9. Procédé suivant la revendication 8, dans lequel on relie la ligne (6) bifilaire à un module (7) principal et on exploite la tension (10) différentielle dans le module (7) principal pour détecter une surcharge du système (1).

10. Procédé suivant la revendication 8 ou 9, dans lequel le premier moyen (2a) de caractérisation de source est conformé de manière à injecter du courant dans la ligne (6) bifilaire et le premier moyen (4a) de caractérisation de puits est conformé de manière à prélever du courant de la ligne (6) bifilaire.

11. Procédé suivant la revendication 8 à 10, dans lequel, à l'aide de la tension différentielle, on décide avant un démarrage du système, si la puissance disponible est supérieure ou égale à la puissance absorbable au maximum et, si l'on est en dessous d'un premier rapport (V1) pouvant être défini, on active le système (1).

12. Procédé suivant la revendication 11, dans lequel, après l'activation du système (1), on utilise un deuxième rapport (V2) pour contrôler une surcharge, le deuxième rapport (V2) étant choisi plus grand que le premier rapport (V1), pour minimiser une décision fausse par des parasites sur la ligne (6) bifilaire.
